# FASCICULE DE BREVET EUROPEEN

(11) **EP 2 760 724 B1**
(45) Date de publication et mention de la délivrance du brevet: **01.03.2023**
(21) Numéro de dépôt: 12759729.2
(22) Date de dépôt: 18.09.2012
(51) Int. Cl.: B61L 23/04

(54) **METHODE ET SYSTEME DE DETERMINATION D'UNE DISPONIBILITE DE VOIE POUR UN VEHICULE GUIDE**
VERFAHREN UND VORRICHTUNG ZUR ERKENNUNG DER VERFÜGBARKEIT DES GLEISES FÜR EIN SPURGEBUNDENES FAHRZEUG
METHOD AND SYSTEM FOR DETERMINING THE AVAILABILITY OF A TRACK FOR A GUIDED VEHICLE

(30) Priorité: 30.09.2011 EP 11290457
(43) Date de publication de la demande: 06.08.2014
(73) Titulaire: Siemens Mobility S.A.S., 92320 Châtillon (FR)
(72) Inventeur: MURA, Jean-Pol, MH 400076 Mumbai (IN); FORNI, Virginie, F-92120 Montrouge (FR); NOGUEIRA ALVES, Clara, F-92130 Issy Les Moulineaux (FR)
(74) Mandataire: Deffner, Rolf
(86) Numéro de dépôt international: PCT/EP2012/068346
(87) Numéro de publication internationale: WO 2013/045315

(56) Documents cités:
- WO-A1-02/058984
- WO-A1-2004/028881
- WO-A1-2005/120924
- WO-A1-2010/083946
- DE-A1- 19 746 970
- DE-A1-102005 029 956
- DE-U1-202006 012 637
- US-A1- 2010 027 841
- US-A1- 2010 090 135
- FRANK KRUSE ET AL: "MULTI SENSOR SYSTEM FOR OBSTACLE DETECTION IN TRAIN APPLICATIONS", GERMAN RADAR SYMPOSIUM PROCEEDINGS, X, XX, 3 septembre 2002 (2002-09-03), pages 477-481, XP009085351,

## Description

La présente invention concerne une méthode et un système de détermination d'une disponibilité de voie pour un véhicule guidé selon le préambule des revendications 1 et 14.

Par « véhicule guidé », il est en particulier fait référence aux moyens de transport en commun tels que des bus, trolleybus, tramways, métros, trains ou unités de train, etc., et aux moyens de transport de charge tel que, par exemple, les ponts roulants, pour lesquels l'aspect sécuritaire est très important et pour lesquels le guidage est assuré par au moins un rail qui définit au moins une voie, i.e. au moins un trajet ou chemin suivi par ledit moyen de transport. En particulier, la présente invention se rapporte au domaine ferroviaire, notamment aux moyens de transport entièrement automatiques, ainsi qu'aux moyens de transport équipés d'un système de contrôle basé sur une communication à distance, par exemple les trains équipés d'un système de contrôle de trains par radio, communément appelé "Communication Based Train Control" (CBTC) .

Un critère de sécurisation important relatif au déplacement d'un véhicule guidé concerne une détermination d'une disponibilité d'une section de voie devant être empruntée par ledit véhicule guidé. En effet, chaque véhicule guidé est uniquement autorisé à se déplacer sur une section de voie si et seulement si cette dernière est disponible, i.e. est libre de tout obstacle susceptible d'entraver le déplacement dudit véhicule guidé ou de nuire à sa sécurité. Cette détermination d'une disponibilité d'une section de voie garantit notamment une distance de séparation minimale entre deux véhicules guidés et est un critère clé de la gestion du trafic des véhicules guidés sur un réseau de circulation.

La détermination de la disponibilité d'une voie est réalisable par divers moyens connus de l'homme du métier. Par exemple, le circuit de voie est un dispositif capable de détecter la présence d'un véhicule guidé sur les rails d'une section de voie ou canton en utilisant le contact d'une première roue du véhicule guidé avec un premier rail de ladite section de voie, et d'une seconde roue fixée au même essieu que ladite première roue avec un second rail de ladite section de voie afin de réaliser une connexion électrique entre le premier et le second rail (la roue et l'essieu étant conducteurs), ladite connexion induisant un court-circuit détectable par ledit circuit de voie, et permettant de signaler une présence dudit véhicule guidé sur ladite section de voie. Malheureusement, le bon fonctionnement du circuit de voie dépend de la longueur de ladite section de voie, de l'état de conduction entre les roues du véhicules guidé et les rails de la voie, des conditions environnementales, et nécessite de plus une section de voie isolée électriquement du reste de la voie et comprenant au moins deux rails afin de former un circuit électrique. Un autre dispositif connu de l'homme du métier et servant à déterminer une disponibilité d'une section de voie est le compteur d'essieux. Ce dispositif comprend deux détecteurs, un premier détecteur placé à une extrémité de la section de voie, et un second détecteur positionné à une autre extrémité de la section de voie, chaque détecteur étant capable de compter le nombre d'essieux le franchissant. Ainsi, par comparaison du nombre d'essieux ayant franchis le premier et le second détecteur, il est possible de déterminer si un véhicule guidé se trouve encore sur ladite section de voie, ou a quitté ladite section de voie. Contrairement au circuit de voie, le compteur d'essieux n'est pas influencé par la longueur de la section de voie à contrôler. Par contre, à longueur de section de voie égale, sa réalisation a un coût plus élevé que le circuit de voie. De plus, certaines parties du véhicule guidé sont susceptibles de générer un faux comptage du nombre d'essieux, bloquant dès lors une section de voie sans raison.

D'autres techniques permettent de vérifier la disponibilité d'une section de voie. Par exemple, le document WO2005/120924A1 décrit un système permettant de scanner une portion de voie et de détecter si un objet ou une anormalité se situe sur ou à proximité de la portion de voie scannée. Également, le document DE 10 2005 029956 A1 décrit un système utilisant une caméra vidéo afin de détecter un changement dans l'état de la voie, par exemple interruption de la voie ou obstacle sur la voie, à partir d'images de ladite voie. Des systèmes similaires sont décrits dans les documents WO 02/058984 A1 et WO 2010/083946 A1 qui utilisent des données de position géographique relatives à la voie pour déterminer un possible danger, lié par exemple à la présence d'un obstacle.

Un but de la présente invention est de proposer une méthode et un système de détermination d'une disponibilité de voie ou de section de voie qui soient simples, sûrs et fiables, facilement adaptable à tout type de véhicule guidé et de voie, économiquement avantageux, et ne présentant pas les inconvénients du circuit de voie et du compteur d'essieux.

Un autre but de la présente invention est en particulier de garantir une détermination de la disponibilité d'une voie ou d'une section de voie atteignant un niveau de sécurité SIL2 à SIL 4, i.e. ayant une probabilité de défaillance dangereuse par heure comprise entre 10⁻⁶ et 10⁻⁹.

Dans ce but, un système et une méthode sont proposés par le contenu des revendications 1 et 13. Un ensemble de sousrevendications présente également des avantages de l'invention.

La présente invention propose un système de détermination d'une disponibilité de voie en temps réel destiné à équiper un véhicule guidé susceptible de se déplacer d'amont vers aval sur une voie (2), ledit système comprenant:
- au moins une caméra capable de capturer en temps réel au moins une image d'une section avale de ladite voie, ladite section avale étant une portion de voie s'étendant d'un premier point de ladite voie situé en aval dudit véhicule guidé à un second point de ladite voie situé en aval dudit véhicule guidé, ladite caméra pouvant en particulier être montée à une extrémité dudit véhicule guidé, par exemple montée en tête de train, la distance séparant la caméra, et donc le véhicule guidé, du second point étant supérieure à la distance la séparant dudit premier point, ladite voie étant en particulier modélisable par un ou plusieurs ensembles de points, chaque point étant caractérisé par une position (ou coordonnée) de sorte que chaque ensemble de points est apte à définir au moins une forme géométrique apte à modéliser au moins un élément de ladite voie, par exemple un rail de ladite voie est définissable par un ensemble de points formant une courbe et représentant ledit rail;
- au moins un dispositif de traitement et d'analyse d'image capable d'analyser automatiquement chaque image prise par chaque caméra, d'y localiser ladite section avale, de déterminer en temps réel d'une part une distance avale de sécurité, notamment en fonction du véhicule guidé et de ses caractéristiques de déplacement, et d'autre part un état de disponibilité de la voie entre ledit premier point et ledit second point;
le système étant caractérisé en ce que le dispositif de traitement et d'analyse d'image utilise des caractéristiques dimensionnelles connues et invariantes de la voie pour localiser ladite section avale par rapport à ladite caméra une fois qu'une ou plusieurs parties de voie ont été reconnues dans ladite image.

Egalement, la présente invention propose une méthode de détermination en temps réel d'une disponibilité de voie destinée à la détermination d'une disponibilité d'une voie pour un véhicule guidé susceptible de se déplacer d'amont vers aval, ladite méthode comprenant les étapes suivantes:
- une capture par une caméra d'au moins une image d'une section avale de ladite voie, ladite section avale étant une portion de voie s'étendant d'un premier point de ladite voie situé en aval dudit véhicule guidé à un second point de ladite voie situé en aval dudit véhicule guidé, la distance séparant la caméra du second point étant supérieure à la distance la séparant dudit premier point;
- un traitement et une analyse automatique de chaque image capturée par ladite caméra afin de localiser ladite voie dans chaque image capturée, de déterminer une distance avale de sécurité et un état de disponibilité de la voie entre ledit premier point et ledit second point;
la méthode étant caractérisée en ce que des caractéristiques dimensionnelles connues et invariantes de la voie sont utilisées afin de localiser ladite section avale par rapport à ladite caméra (31) une fois qu'une ou plusieurs parties de voie ont été reconnues dans ladite image.

Préférentiellement, ledit traitement et ladite analyse de chaque image peut en particulier comprendre au moins une étape parmi les étapes suivantes:
- une numérisation de chaque image capturée afin de transformer ladite image capturée en un format utilisable pour une localisation de ladite voie;
- une reconnaissance de ladite section avale dans ladite image acquise par ladite caméra au moyen d'un algorithme de reconnaissance d'objet et une localisation de ladite section avale par rapport à ladite caméra;
- une détermination d'une distance avale de sécurité et une détermination d'un état de disponibilité de la voie entre ledit premier point et ledit second point à partir d'une donnée de localisation résultant d'une localisation de ladite section avale de ladite voie par rapport à ladite caméra.

Préférentiellement, l'algorithme de reconnaissance est capable de reconnaître au moins une partie de ladite section avale de ladite voie dans chaque image et de localiser dans chaque image l'intégralité de ladite section avale de ladite voie, notamment à partir d'une technique de reconnaissance géométrique d'une section de voie, utilisant par exemple une technique d'apprentissage automatique tel que le boosting, ladite technique de reconnaissance coopérant avec une technique de localisation afin de localiser chaque point de la section de voie par rapport à la caméra, i.e. l'emplacement ou la position relative de chaque point par rapport à la caméra est déterminable au moyen de ladite technique de localisation selon l'invention, et donc leur emplacement ou position par rapport au véhicule guidé peut être déterminé.

Préférentiellement, ledit algorithme de reconnaissance est en particulier capable, afin de réaliser la reconnaissance de ladite section avale dans une image acquise par la caméra, de faire une corrélation ou une correspondance entre un ensemble de pixels d'une image capturée par ladite caméra et représentant une partie ou toute ladite section avale de la voie et un ensemble de caractéristiques des voies, lesdites caractéristiques pouvant être préalablement enregistrées dans une base de données du système selon l'invention et étant aptes à définir par exemple des formes géométriques particulières de ladite voie destinées à permettre la reconnaissance de ladite voie ou d'une de ses sections.

Préférentiellement, ladite méthode selon l'invention peut comprendre en particulier une phase initiale d'apprentissage destinée à créer ladite base de données. Dans ce cas, cette dernière comprend au moins des exemples d'images de sections de voie destinés à l'apprentissage automatique de la reconnaissance de la section avale par l'algorithme de reconnaissance, notamment selon ladite technique de boosting. Cette base de données peut par exemple comprendre un ensemble d'images qui ont été acquises par ladite caméra montée sur ledit véhicule guidé lorsque ce dernier se déplaçait, lors de ladite phase initiale d'apprentissage, le long de ladite voie comprenant ladite section avale, lesdites images acquises servant alors d'exemples d'images (i.e. des images typiques représentant une section de voie, notamment ladite section avale) de ladite section de voie sur laquelle est susceptible de se déplacer ledit véhicule guidé et qui sont destinés audit apprentissage. Ces exemples d'images sont en particulier ensuite utilisés par l'algorithme de reconnaissance pour son apprentissage de ladite reconnaissance d'une partie ou de l'intégralité d'une section de voie, et mis en oeuvre ensuite pour la reconnaissance de la section avale de ladite voie.

En particulier, une fois ladite phase d'apprentissage terminée, ladite base de données est ensuite préférentiellement utilisée pour la détermination en temps réel de l'état de disponibilité de la section avale de la voie, les données de ladite base de données servant notamment à la reconnaissance et à la localisation rapide de ladite section de voie. Avantageusement, ladite base de données est évolutive et adaptative en ce que, une fois ladite phase initiale d'apprentissage terminée, elle peut être actualisée en temps réel par d'autres images acquises par ladite caméra lors de déplacements ultérieures dudit véhicule guidé le long de ladite voie.

L'étape de localisation de ladite section avale par rapport à la caméra peut être préférentiellement réalisée au moyen d'au moins une des techniques de localisation décrites ci-dessous, soit dès que la reconnaissance de ladite section avale de voie à partir de l'image acquise par la caméra est totalement effectuée, soit dès qu'une partie de ladite section avale de voie est reconnue. Par localisation il est notamment fait référence à la détermination de la position de chaque point de la section avale par rapport à ladite caméra.

Par exemple, ladite base de données comprend un ensemble de coordonnées géographiques destinées à décrire et déterminer la position terrestre des points formant ladite voie. En particulier, cet ensemble de coordonnées géographiques permet avantageusement de déterminer la position en temps réel dudit véhicule guidé sur ladite voie, par exemple à partir de données de vitesse de déplacement dudit véhicule guidé par exemple communiquées audit système selon l'invention par un système de contrôle du véhicule guidé. Préférentiellement, ledit algorithme de reconnaissance est capable de prendre en compte en temps réel le positionnement dudit véhicule guidé sur ladite voie à partir de sa vitesse de déplacement et desdites coordonnées géographiques, ou préférentiellement, à partir de données de localisation fournies par un système de localisation capable d'indiquer en temps réel la position du véhicule guidé, tel qu'un système GPS, soit intégré au système selon l'invention, soit embarqué à bord du véhicule guidé. Ainsi, la position dudit véhicule guidé corrélativement audit ensemble de coordonnées ainsi que sur ladite voie peut être déterminée en temps réel par le système selon l'invention. Préférentiellement, ladite section avale peut dès lors être localisée par rapport audit véhicule guidé au moyen d'au moins une donnée de localisation dès que la reconnaissance d'au moins une partie de ladite section avale permet une correspondance entre ladite partie de la section avale et ledit ensemble de coordonnées géographiques. Ainsi, le positionnement en temps réel dudit véhicule guidé combiné à la reconnaissance de ladite section avale permet avantageusement d'associer à chaque point de ladite section avale une coordonnée géographique, et donc de déterminer une donnée de localisation destinée à indiquer la position dudit point par rapport à ladite caméra, en particulier par rapport audit véhicule guidé. Préférentiellement, le dispositif de traitement et d'analyse selon l'invention est ainsi capable de déterminer une longueur de voie séparant ladite caméra, et donc ledit véhicule guidé, d'au moins un troisième point situé entre ledit premier point et ledit second point de ladite section avale. Cette détermination d'une longueur de voie est en particulier utilisée afin de contrôler et de maintenir une distance de sécurité en aval dudit véhicule guidé, afin de prévenir par exemple toute collision entre ledit véhicule guidé et un autre véhicule guidé, ou afin de déclencher une procédure de freinage d'urgence si un objet se trouve sur la voie à une position définissant une longueur de voie séparant ledit véhicule guidé dudit objet inférieure à ladite distance avale de sécurité. En particulier, ladite distance avale de sécurité peut varier en fonction d'une vitesse de déplacement dudit véhicule guidé ou de caractéristiques de freinage dudit véhicule guidé et peut notamment être automatiquement évaluée et comparée à une longueur de voie calculée par le dispositif de traitement et d'analyse selon l'invention.

Selon la présente invention, le dispositif de traitement et d'analyse est capable de détecter et de reconnaître, notamment au moyen dudit algorithme de reconnaissance, dans ladite image capturée, au moins un objet dont au moins une caractéristique dimensionnelle est invariante et connue dudit dispositif de traitement et d'analyse (i.e. enregistrée dans ladite base de données dudit système selon l'invention) afin de déterminer, à partir de ladite caractéristique dimensionnelle et d'au moins une caractéristique optique de ladite caméra, une distance entre ledit objet et ladite caméra, ou autrement dit entre ledit objet et ledit véhicule guidé.

Par exemple, un tel objet peut être la voie elle-même dont des caractéristiques dimensionnelles sont invariantes et connues tel que l'écartement des rails, ou un espacement de traverses. Un tel objet peut aussi être un autre véhicule guidé dont au moins une caractéristique dimensionnelle est connue et invariante, ou une affiche d'aide à la mesure de distance, apte à être montée en bordure de voie ou accolée audit autre véhicule guidé et configurée de façon à présenter une forme géométrique apte à servir à une détermination de ladite distance. Notamment, à partir des caractéristiques dimensionnelles connues et invariantes de la voie elle-même et des caractéristiques optiques de la caméra, le dispositif de traitement et d'analyse est capable de localiser ladite section avale de ladite voie en calculant pour chaque point de ladite voie, ladite donnée de localisation qui est par exemple une longueur de voie séparant la caméra, ou le véhicule guidé, dudit point, ou encore préférentiellement, la position géographique dudit point par rapport à la caméra ou au véhicule guidé. Ainsi, selon la présente invention, des caractéristiques dimensionnelles connues et invariantes de la voie sont utilisées afin de localiser ladite section avale par rapport à ladite caméra, i.e. afin de déterminer la position des points de la section avale par rapport à ladite caméra, une fois qu'une ou plusieurs parties de voie ont été reconnues dans ladite image. Dès lors, le dispositif de traitement et d'analyse selon l'invention est en particulier capable de déterminer ladite longueur de voie séparant ladite caméra, et donc ledit véhicule guidé, d'au moins un troisième point situé entre ledit premier point et ledit second point de ladite section avale. En particulier, l'algorithme de reconnaissance est ensuite capable de déterminer si un objet se trouve entre le véhicule guidé et ledit troisième point.

En particulier, la longueur de voie entre ladite caméra et tout objet reconnu par le dispositif de traitement et d'analyse, et ayant une caractéristique dimensionnelle comprise dans la base de données, par exemple un autre véhicule guidé, peut être déterminée par le système selon l'invention. En particulier, ledit autre véhicule guidé peut être équipé de ladite affiche destinée à coopérer avec ledit dispositif de traitement et d'analyse afin de déterminer ladite longueur de voie séparant ledit véhicule guidé dudit autre véhicule guidé. Ainsi, le dispositif de traitement et d'analyse est capable de déterminer la distance séparant ladite caméra d'un objet reconnu dans ladite image acquise par la caméra, comprenant une caractéristique dimensionnelle connue et invariante, et comprise dans ladite base de données.

Préférentiellement, chaque objet associable à une voie, i.e. appartenant à l'environnement de la voie et/ou du véhicule guidé, et dont une caractéristique dimensionnelle est connue et invariante, peut être répertorié, par exemple sous forme de paramètres géométriques, dans ladite base de données dudit système selon l'invention, afin d'être d'une part reconnu dans ladite image acquise par la caméra au moyen dudit algorithme de reconnaissance, et d'autre part, afin que la distance séparant ledit objet de la caméra soit évaluée à partir de sa ou ses caractéristiques dimensionnelles et des caractéristiques optiques de la caméra.

Préférentiellement, l'état de disponibilité de la section avale de voie peut en particulier être déterminé par le dispositif de traitement et d'analyse de la façon suivante:
- si la longueur de voie en aval dudit véhicule guidé, séparant ledit premier point dudit second point, et calculable par le dispositif de traitement et d'analyse, est supérieure ou égale à ladite distance avale de sécurité et ne comprend aucun objet susceptible d'entraver le déplacement dudit véhicule guidé, alors ladite section avale de voie est disponible;
- si la longueur de voie en aval dudit véhicule guidé, séparant ledit premier point dudit second point, et calculable par le dispositif de traitement et d'analyse, est inférieure à ladite distance de sécurité, ou si un objet susceptible d'entraver le déplacement dudit véhicule guidé se trouve à une longueur de voie inférieure à la distance avale de sécurité, alors ladite section avale de voie est indisponible et en particulier un automatisme de réaction à ladite indisponibilité peut être mis en oeuvre, tel un freinage dudit véhicule guidé, en communiquant par exemple un signal d'état de disponibilité de la voie à un système de contrôle du véhicule guidé.

Préférentiellement, la longueur de voie séparant ledit véhicule guidé d'un objet occupant ladite voie en aval dudit véhicule guidé et susceptible d'entraver le déplacement dudit véhicule guidé peut être soit déduite d'une mesure de distance séparant ledit objet dudit véhicule guidé si une caractéristique dimensionnelle dudit objet est connue et invariante, soit déduite d'une correspondance entre la position dudit objet sur la voie et la position d'un des points de la voie, étant donné qu'à chaque point de la voie peut être assimilé une donnée de localisation indiquant la position dudit point par rapport au véhicule guidé.

Préférentiellement, le système selon l'invention est caractérisé en ce qu'il comprend une autre caméra capable de capturer, simultanément à la capture de ladite image par ladite caméra, au moins une autre image de la section avale de ladite voie, ladite caméra et ladite autre caméra étant ainsi capables de coopérer l'une avec l'autre afin de créer une image stéréo comprenant ladite image et ladite autre image de ladite section avale. L'image stéréo de ladite section avale permet avantageusement une détermination directe de la localisation de la section avale et d'un positionnement d'un objet par rapport à un ou plusieurs points de ladite section avale par utilisation d'une technique tridimensionnelle de représentation de ladite section avale, et peut être utilisée en combinaison avec les méthodes de localisation décrites cidessus afin d'une part de confirmer l'état de disponibilité de la section avale, et d'autre part, de garantir en sécurité une localisation correcte de ladite section avale.

En particulier, le système selon l'invention est caractérisé en ce qu'il comprend un système radar capable de coopérer avec ladite caméra ou ladite autre caméra afin de détecter tout objet occupant ladite section avale et pouvant entraver potentiellement le déplacement dudit véhicule guidé. Avantageusement, ledit système radar est apte à confirmer de manière sécuritaire ladite détermination de l'état de disponibilité de la section avale, notamment par la détermination d'une distance séparant ledit objet de ladite caméra. En particulier, dès qu'un objet est reconnu dans une image acquise par ladite caméra, un dispositif de déplacement dudit système selon l'invention est capable de piloter un positionnement dudit système radar et/ou de ladite caméra en fonction d'une position de ladite section avale ou dudit objet dans ladite image capturée par la caméra, notamment afin de maintenir ladite image centrée sur ladite voie.

Préférentiellement, la détection d'un objet susceptible d'entraver le déplacement du véhicule guidé peut être corrélée à une détection d'une discontinuité de la voie dans ladite section avale. En effet, ledit dispositif de traitement et d'analyse est en particulier capable de détecter une discontinuité de ladite voie entre ledit premier point et ledit second point par analyse de ladite image acquise par la caméra. Toute discontinuité de ladite voie est en particulier analysable par ledit dispositif de traitement et d'analyse afin de déterminer s'il elle résulte d'une occupation de ladite voie par un objet. Par discontinuité il est fait référence à une analyse de la continuité de la voie, par exemple d'au moins un rail de ladite voie, ou des deux rails de la voie, dans ladite section avale.

Préférentiellement, ledit système selon l'invention est de plus caractérisé en ce que le dispositif de traitement et d'analyse est capable de détecter une signalisation sol en aval dudit véhicule guidé. En particulier, ledit algorithme de reconnaissance est capable d'identifier chaque signalisation sol apparaissant dans une image prise par ladite caméra. De plus, le dispositif de traitement et d'analyse est en particulier capable d'interpréter une information donnée par ladite signalisation sol identifiée et de communiquer à un système de contrôle du véhicule guidé ou à un contrôleur ladite information.

Préférentiellement, ledit système selon l'invention est caractérisé en ce qu'il comprend un dispositif de signalement capable de générer un signal d'état de disponibilité de voie apte à caractériser l'état de disponibilité de ladite section avale, ledit signal d'état valant une première valeur lorsque ladite voie est disponible pour ledit véhicule guidé et une seconde valeur lorsque ladite voie est indisponible, par exemple occupée par un autre véhicule guidé ou par un objet susceptible d'entraver le déplacement dudit véhicule guidé. En particulier, ledit système selon l'invention est caractérisé en ce qu'il comprend un dispositif de communication capable de transmettre ledit signal d'état à au moins un autre dispositif de communication, qui peut en particulier être un dispositif de communication d'un autre système de détermination de disponibilité de voie destiné à équiper un autre véhicule guidé ou un dispositif de communication au sol, équipant par exemple un poste de commande central d'un ou plusieurs véhicules guidés. Avantageusement, l'échange entre véhicules guidés dudit signal d'état permet au système selon l'invention d'actualiser en temps réel l'état du réseau de voies sur lesquelles le véhicule guidé qu'il équipe est susceptible de se déplacer.

Préférentiellement, ledit système selon l'invention comprend au moins une caméra supplémentaire configurée pour capturer au moins une image d'une section amont de ladite voie, ladite section amont étant une portion de voie s'étendant d'un autre premier point de ladite voie situé en amont dudit véhicule guidé à un autre second point de ladite voie situé en amont dudit véhicule guidé, la distance séparant le véhicule guidé dudit autre second point étant supérieure à la distance le séparant dudit autre premier point. En particulier, le dispositif de traitement et d'analyse est capable d'analyser chaque image acquise par ladite caméra supplémentaire afin de déterminer si le véhicule guidé a quitté ladite section avale. Avantageusement et en particulier, le dispositif de traitement et d'analyse peut communiquer à d'autres véhicules guidés, lesdits dispositifs de communication, un signal apte à indiquer que ledit véhicule guidé a quitté ladite section avale de voie.

Finalement, la présente invention revendique également un véhicule guidé caractérisé en ce qu'il comprend ledit système de détermination d'une disponibilité de voie selon l'invention, ainsi qu'une affiche d'aide à la mesure de distance destinée à coopérer avec le système de détermination d'une disponibilité de voie, configurée pour être applicable sur un support d'une surface, par exemple externe, d'un autre véhicule guidé ou en bordure de voie, comprenant une forme géométrique dimensionnée pour permettre au système de détermination d'une disponibilité de voie de déterminer une distance entre ladite affiche et ledit véhicule guidé, par exemple un ensemble de trois disques chacun disposé au sommet d'un triangle, dont la hauteur et largeur peut ensuite être utilisée afin de déterminer une distance séparant ladite affiche et ladite caméra.

Finalement, un exemple de réalisation et d'application de la présente invention est fourni à l'aide de:
- Figure 1: exemple de réalisation selon l'invention d'un système de détermination d'une disponibilité de voie destiné à équiper un véhicule guidé (vue de dessus).
- Figure 2: exemple d'image prise par une caméra du système selon l'invention dans une configuration donnée selon Fig. 1.

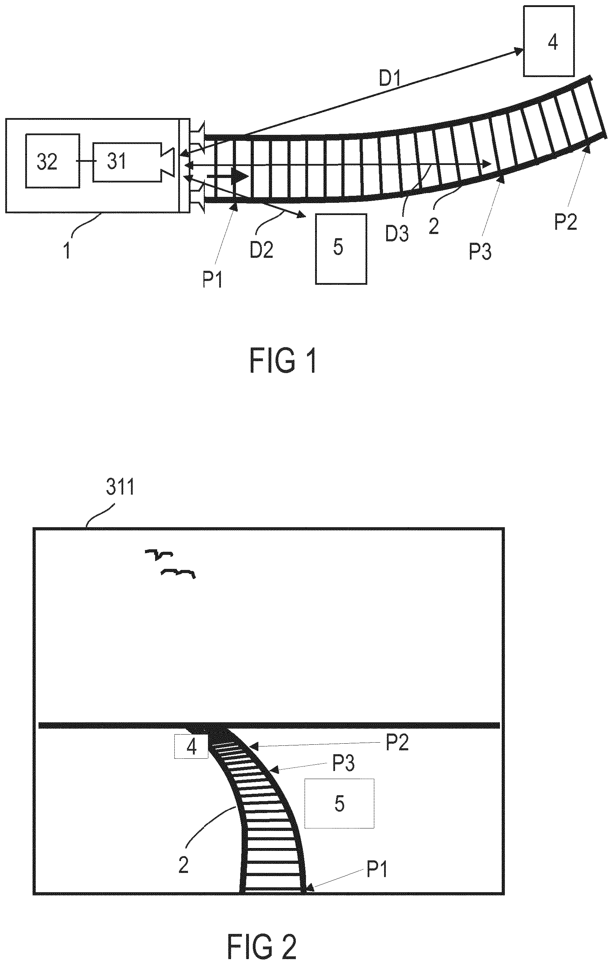

A titre d'exemple, la figure 1 montre une vue de dessus d'un véhicule guidé 1 se déplaçant sur une voie 2 d'amont vers aval, ledit véhicule guidé 1 comprenant un système de détermination d'une disponibilité de voie selon l'invention, ledit système comprenant:
- au moins une caméra 31 capable de capturer au moins une image 311, telle que présentée en Fig. 2, d'une section avale de ladite voie 2, ladite section avale étant une portion de voie s'étendant d'un premier point P1 de ladite voie situé en aval dudit véhicule guidé à un second point P2 de ladite voie situé en aval dudit véhicule guidé 1, la distance séparant la caméra 31 du second point P2 étant supérieure à la distance la séparant dudit premier point P1;
- au moins un dispositif de traitement et d'analyse d'image 32 capable d'analyser chaque image 311 (cf. Fig. 2) prise par chaque caméra 31, d'y localiser ladite section avale, de déterminer d'une part une distance avale de sécurité, notamment en fonction du véhicule guidé et de ses caractéristiques de déplacement, tel que vitesse de déplacement et capacité de freinage, et d'autre part un état de disponibilité de la voie entre ledit premier point P1 et ledit second point P2.

En particulier, le dispositif de traitement et d'analyse 32 comprend un algorithme de reconnaissance, capable de reconnaître dans une image 311 (cf. Fig. 2) telle que prise par la caméra 31, au moins un objet, tel que ladite voie 2 et une ou plusieurs signalisations, tel qu'une première signalisation 4 et une seconde signalisation 5. Avantageusement, le dispositif de traitement et d'analyse comprend de plus une base de données répertoriant des caractéristiques dimensionnelles invariantes appartenant auxdits objets tel que la voie 2 et les signalisations 4, 5. A partir desdites caractéristiques dimensionnelles, le dispositif de traitement et d'analyse 32 est capable de déterminer une distance séparant ladite caméra 31 dudit objet, par exemple la distance D1 séparant ladite caméra 31 de la première signalisation 4, la distance D2 séparant ladite caméra 31 de la seconde signalisation 5 et la distance D3 séparant ladite caméra 31 d'un troisième point P3 de ladite voie 2. Ainsi, la reconnaissance, par l'algorithme de reconnaissance, d'objets dont des caractéristiques dimensionnelles sont répertoriées dans ladite base de données permet au dispositif de traitement et d'analyse 32 d'établir une échelle de distances associable à la représentation de ladite voie 2 dans ladite image, car à chaque point P1, P2, P3 et à chaque objet tel que la première signalisation 4 et la seconde signalisation 5 correspond une distance. Dès lors, le dispositif de traitement et d'analyse 32 est en particulier capable de calculer une longueur de voie séparant ladite caméra 31 dudit troisième point P3, et de contrôler en temps réel d'une part un état de disponibilité de la voie entre ledit véhicule guidé et ledit troisième point P3 et d'autre part, que ladite longueur de voie soit supérieure ou égale à ladite distance avale de sécurité.

Préférentiellement, l'algorithme de reconnaissance utilise une fonction d'inter-corrélation entre ladite image 311 capturée par ladite caméra 31 et des images de ladite voie préalablement enregistrées dans la base de données dudit système selon l'invention. Ladite fonction d'inter-corrélation est par exemple une transformée de Fourier rapide (Fast Fourier Transform) ou une transformée en ondelette. Lesdites images préalablement enregistrées, par exemple lors de ladite phase initiale d'apprentissage, sont en particulier un ensemble d'images acquises par ladite caméra 31 lors d'un parcours préalable du véhicule guidé le long de différents trajets susceptibles d'être parcourus par ledit véhicule guidé. Lesdites images préalablement acquises sont préférentiellement stockées dans une base de données embarquée, i.e. montée à bord dudit véhicule guidé. Ladite base de données embarquée sert alors à la comparaison d'images 311 acquises en temps réel par ladite caméra 31 avec des images préalablement acquises et stockées dans ladite base de données afin de localiser ledit véhicule guidé et déterminer la disponibilité de la voie en aval dudit véhicule guidé.

Préférentiellement, la fréquence de l'acquisition des images destinées à constituer ladite banque de données dépend de la vitesse dudit véhicule guidé. Avantageusement, afin de s'affranchir d'un phénomène de dispersion de l'acquisition desdites images destinées à être stockées dans ladite base de données, une base de données spécifique à chaque véhicule guidé est préférentiellement réalisée, une base de données spécifique équipant dès lors un véhicule guidé spécifique. En particulier, chaque image acquise préalablement afin de former ladite base de données est prétraitée afin de s'affranchir, ou au moins de diminuer l'influence de conditions extérieures qui varient en fonction de la météo, du climat, ou du moment de l'acquisition de ladite image, comme par exemple une variation de luminosité, un déplacement d'ombres portées, une variation de la position d'astres pouvant influer sur des caractéristiques de l'image acquise (position du soleil par rapport à la voie ou à la caméra au cours de la journée ou de l'année), variation des saisons, etc. En effet, la variation desdites conditions extérieures peut perturber la détermination de la position dudit véhicule guidé (localisation) par l'algorithme de reconnaissance ainsi que la détection de ladite disponibilité de voie. Afin d'éviter ces perturbations, la présente invention propose par exemple que l'algorithme de reconnaissance soit capable de tenir compte de la connaissance de la position du soleil dans le ciel et du relief de la scène imagée afin de prévoir des ombres portées et de pouvoir les supprimer des images acquises en temps réel lors du parcours du véhicule guidé, ou bien de les rajouter sur les images de la base de données, notamment lors de ladite phase initiale d'apprentissage. Egalement, un autre moyen pour s'affranchir de, ou au moins diminuer, l'influence desdites conditions extérieures sur la détection de la disponibilité de voie et ladite localisation dudit véhicule guidé consiste en particulier à effectuer différentes acquisitions d'images pour un même trajet ou parcours du véhicule guidé sous différentes conditions extérieures, par exemple sous différentes conditions de luminosité, afin que ladite base de données comprenne des images acquises sous différentes conditions extérieures, par exemple de luminosité, pour un même parcours.

Préférentiellement, chaque image enregistrée et stockée dans ladite base de données est associée à au moins une coordonnée géographique permettant la localisation dudit véhicule guidé, ladite coordonnée géographique étant par exemple la position terrestre dudit véhicule guidé lors de l'acquisition de ladite image destinée à être enregistrée et stockée dans ladite base de données, ou sa position linéaire relative à la voie sur laquelle il se déplace, ladite coordonnée géographique étant par exemple dans ce cas le point kilométrique le long de la voie pouvant être de plus associé au nom de la voie pour pouvoir différentier les différents parcours susceptibles d'être suivis par ledit véhicule guidé. Avantageusement, lorsqu'une image acquise en temps réel par ladite caméra 31 est reconnue par l'algorithme de reconnaissance comme correspondant à une des images préalablement stockées dans ladite base de données, le dispositif de traitement et d'analyse est ensuite en particulier capable d'associer à la position dudit véhicule guidé ladite coordonnée géographique, par exemple en faisant coïncider la position dudit véhicule guidé à ladite coordonnée géographique lorsque cette dernière caractérise la position dudit véhicule guidé lors de l'acquisition des images destinées à être enregistrées et stockées dans ladite base de données.

Préférentiellement, lesdites images de la base de données sont classées par zones correspondant par exemple à différents parcours susceptibles d'être suivis par le véhicule guidé, ou différents endroits du parcours comprenant des éléments facilement reconnaissables. En particulier, la présente invention comprend également une détermination initiale de la position d'un véhicule guidé lorsque la position de ce dernier est complètement inconnue, i.e. lorsque la zone où se trouve ledit véhicule guidé est notamment inconnue. Durant ladite détermination initiale, ledit algorithme de reconnaissance compare en particulier une image acquise en temps réel par ladite caméra à l'ensemble des images stockées dans ladite base de données afin de déterminer dans quelle zone se trouve ledit véhicule guidé. Une fois ladite zone déterminée, seules les images de ladite zone et de zones voisines sont utilisées par l'algorithme de reconnaissance, afin d'effectuer par exemple des calculs de détermination de la position dudit véhicule guidé et de disponibilité de voie. Avantageusement, plus la connaissance de la position dudit véhicule guidé et de sa vitesse de déplacement sont précises, plus les calculs effectués par ledit algorithme de reconnaissance sont réduits.

En résumé, la méthode et le système de détermination d'une disponibilité de voie pour un véhicule guidé présentent plusieurs avantages par rapport aux méthodes et systèmes existants en ce qu'ils permettent:
- une modernisation d'anciens équipements et réseaux de véhicules guidés à moindre coûts: la modernisation/migration de système de signalisation dits conventionnels (basés sur les circuits de voie ou compteurs d'essieux) vers des systèmes de type CBTC est longue et coûteuse, car elle oblige à un recâblage de ces détecteurs, et crée des problèmes d'accès à la voie, à la voirie, et aux infrastructures, alors que la présente invention permet de se passer de systèmes de signalisation dits conventionnels basés sur les circuits de voie ou compteurs d'essieux, et permet de relier sans fil le CBTC au système de signalisation existant;
- une détection en sécurité d'une disponibilité de voie;
- une communication d'un état de disponibilité de voie à d'autres véhicules guidés ou systèmes de contrôle.

## Revendications

1. Système de détermination d'une disponibilité de voie destiné à équiper un véhicule guidé (1) susceptible de se déplacer d'amont vers aval, ledit système comprenant:
- au moins une caméra (31) capable de capturer au moins une image (311) d'une section avale de ladite voie (2), ladite section avale étant une portion de voie s'étendant d'un premier point (P1) de ladite voie (2) situé en aval dudit véhicule guidé (1) à un second point (P2) de ladite voie (2) situé en aval dudit véhicule guidé (1), la distance séparant la caméra (31) du second point (P2) étant supérieure à la distance la séparant dudit premier point (P1);
- au moins un dispositif de traitement et d'analyse (32) d'image capable d'analyser chaque image (311) prise par chaque caméra (31), d'y localiser ladite section avale, de déterminer d'une part une distance avale de sécurité et d'autre part un état de disponibilité de la voie (2) entre ledit premier point (P1) et ledit second point (P2),
**caractérisé en ce que** le dispositif de traitement et d'analyse (32) d'image utilise des caractéristiques dimensionnelles connues et invariantes de la voie pour localiser ladite section avale par rapport à ladite caméra (31) une fois qu'une ou plusieurs parties de voie ont été reconnues dans ladite image.

2. Système selon revendication 1, **caractérisé en ce que** le dispositif de traitement et d'analyse (32) est capable de déterminer une longueur de voie séparant ledit véhicule guidé (1) d'au moins un troisième point (P3) situé entre ledit premier point (P1) et ledit second point (P2) .

3. Système selon une des revendications 1 ou 2, **caractérisé en ce qu'**il comprend une base de données.

4. Système selon une des revendications 1 à 3, **caractérisé en ce qu'**il comprend une autre caméra capable de capturer au moins une image de la section avale de ladite voie (2), ladite caméra (31) et ladite autre caméra étant capable de coopérer afin de créer une image stéréo de ladite section avale.

5. Système selon une des revendications 1 à 4, **caractérisé en ce qu'**il comprend un système radar capable d'imager ladite section avale et de coopérer avec ladite caméra (31) .

6. Système selon revendication 5, **caractérisé en ce qu'**il comprend un dispositif de déplacement capable de piloter un positionnement dudit système radar et/ou de ladite caméra (31) en fonction d'une position de ladite section avale dans ladite image (311) capturée par la caméra (31) .

7. Système selon une des revendications 1 à 6, **caractérisé en ce que** ledit dispositif de traitement et d'analyse (32) d'image est capable de détecter une discontinuité de ladite voie (2) entre ledit premier point (P1) et ledit second point (P2).

8. Système selon une des revendications 1 à 7, **caractérisé en ce que** le dispositif de traitement et d'analyse (32) d'image est capable de détecter une signalisation (4, 5) sol en aval dudit véhicule guidé (1).

9. Système selon une des revendications 1 à 8, **caractérisé en ce qu'**il comprend un dispositif de signalement capable de générer un signal d'état de disponibilité de voie apte à caractériser l'état de disponibilité de ladite section avale, ledit signal valant une première valeur lorsque ladite voie est disponible pour ledit véhicule guidé (1) et une seconde valeur lorsque ladite voie (2) est occupée.

10. Système selon la revendication 9, **caractérisé en ce qu'**il comprend un dispositif de communication capable de transmettre ledit signal d'état à un autre dispositif de communication.

11. Système selon une des revendications 1 à 10, **caractérisé en ce qu'**il comprend au moins une caméra supplémentaire configurée pour capturer au moins une image d'une section amont de ladite voie (2).

12. Véhicule guidé (1) **caractérisé en ce qu'**il comprend ledit système de détermination d'une disponibilité de voie selon revendication 1.

13. Méthode de détermination d'une disponibilité de voie destinée à la détermination d'une disponibilité d'une voie (2) pour un véhicule guidé (1) susceptible de se déplacer d'amont vers aval, ladite méthode comprenant les étapes suivantes:
- une capture par une caméra (31) d'au moins une image d'une section avale de ladite voie (2), ladite section avale étant une portion de voie (2) s'étendant d'un premier point (P1) de ladite voie (2) situé en aval dudit véhicule guidé (1) à un second point (P2) de ladite voie (2) situé en aval dudit véhicule guidé (1), la distance séparant le la caméra (31) du second point (P2) étant supérieure à la distance la séparant dudit premier point (P1);
- un traitement et une analyse automatique de chaque image capturée afin de localiser ladite voie dans chaque image capturée, de déterminer une distance avale de sécurité et un état de disponibilité de la voie entre ledit premier point (P1) et ledit second point (P2),
**caractérisée en ce que** des caractéristiques dimensionnelles connues et invariantes de la voie sont utilisées afin de localiser ladite section avale par rapport à ladite caméra (31) une fois qu'une ou plusieurs parties de voie ont été reconnues dans ladite image.

14. Méthode selon la revendication 13, **caractérisée en ce qu'**elle comprend une génération d'un signal d'état capable de caractériser l'état de disponibilité de la voie et une transmission dudit signal d'état à au moins un autre véhicule guidé.

## Patentansprüche

1. System zur Erkennung der Verfügbarkeit des Gleises, das dazu bestimmt ist, ein spurgebundenes Fahrzeug (1) auszustatten, das sich von stromaufwärts nach stromabwärts bewegen kann, wobei das System umfasst:
- mindestens eine Kamera (31), die in der Lage ist, mindestens ein Bild (311) eines stromabwärtigen Abschnitts des Gleises (2) zu erfassen, wobei der stromabwärtige Abschnitt ein sich von einem ersten Punkt (P1) des Gleises (2) stromabwärts des spurgebundenen Fahrzeugs (1) zu einem zweiten Punkt (P2) des Gleises (2) stromabwärts des spurgebundenen Fahrzeugs (1) erstreckender Gleisabschnitt ist, wobei der Abstand von der Kamera (31) zu dem zweiten Punkt (P2) größer ist als der Abstand von derjenigen zu dem ersten Punkt (P1);
- mindestens eine Bildverarbeitungs- und Analysevorrichtung (32), die in der Lage ist, jedes von jeder Kamera (31) aufgenommene Bild (311) zu analysieren, den stromabwärtigen Abschnitt darin zu lokalisieren, einerseits einen stromabwärtigen Sicherheitsabstand und andererseits einen Verfügbarkeitszustand des Gleises (2) zwischen dem ersten Punkt (P1) und dem zweiten Punkt (P2) zu erkennen,
**dadurch gekennzeichnet, dass** die Bildverarbeitungs- und Analysevorrichtung (32) bekannte und unveränderliche Abmessungseigenschaften des Gleises verwendet, um den stromabwärtigen Abschnitt in Bezug auf die Kamera (31) zu lokalisieren, nachdem ein oder mehrere Gleisteile in dem Bild erkannt wurden.

2. System nach Anspruch 1, **dadurch gekennzeichnet, dass** die Verarbeitungs- und Analysevorrichtung (32) in der Lage ist, eine Gleislänge von dem spurgebundenen Fahrzeug (1) zu mindestens einem zwischen dem ersten Punkt (P1) und dem zweiten Punkt (P2) gelegenen dritten Punkt (P3) zu erkennen.

3. System nach einem der Ansprüche 1 oder 2, **dadurch gekennzeichnet, dass** es eine Datenbank umfasst.

4. System nach einem der Ansprüche 1 bis 3, **dadurch gekennzeichnet, dass** es eine weitere Kamera umfasst, die in der Lage ist, mindestens ein Bild des stromabwärtigen Abschnitts des Gleises (2) zu erfassen, wobei die Kamera (31) und die weitere Kamera in der Lage sind, zusammenzuarbeiten, um ein Stereobild des stromabwärtigen Abschnitts zu erzeugen.

5. System nach einem der Ansprüche 1 bis 4, **dadurch gekennzeichnet, dass** es ein Radarsystem umfasst, das in der Lage ist, den stromabwärtigen Abschnitt abzubilden und mit der Kamera (31) zusammenzuarbeiten.

6. System nach Anspruch 5, **dadurch gekennzeichnet, dass** es eine Bewegungsvorrichtung umfasst, die in der Lage ist, eine Positionierung des Radarsystems und/oder der Kamera (31) gemäß einer Position des stromabwärtigen Abschnitts in dem von der Kamera (31) erfassten Bild (311) zu steuern.

7. System nach einem der Ansprüche 1 bis 6, **dadurch gekennzeichnet, dass** die Bildverarbeitungs- und Analysevorrichtung (32) in der Lage ist, eine Diskontinuität in dem Gleis (2) zwischen dem ersten Punkt (P1) und dem zweiten Punkt (P2) zu erkennen.

8. System nach einem der Ansprüche 1 bis 7, **dadurch gekennzeichnet, dass** die Bildverarbeitungs- und Analysevorrichtung (32) in der Lage ist, eine Bodenbeschilderung (4, 5) stromabwärts des spurgebundenen Fahrzeugs (1) zu erkennen.

9. System nach einem der Ansprüche 1 bis 8, **dadurch gekennzeichnet, dass** es eine Meldevorrichtung umfasst, die in der Lage ist, ein Verfügbarkeitszustandssignal des Gleises zu erzeugen, das den Verfügbarkeitszustand des stromabwärtigen Abschnitts charakterisieren kann, wobei das Signal einen ersten Wert hat, wenn der Gleis für das spurgebundene Fahrzeug (1) verfügbar ist und einen zweiten Wert hat, wenn der Gleis (2) belegt ist.

10. System nach Anspruch 9, **dadurch gekennzeichnet, dass** es eine Kommunikationsvorrichtung umfasst, die in der Lage ist, das Zustandssignal an eine weitere Kommunikationsvorrichtung zu übertragen.

11. System nach einem der Ansprüche 1 bis 10, **dadurch gekennzeichnet, dass** es mindestens eine zusätzliche Kamera umfasst, die so konfiguriert ist, dass sie mindestens ein Bild eines stromaufwärtigen Abschnitts des Gleises (2) erfasst.

12. Spurgebundenes Fahrzeug (1), **dadurch gekennzeichnet, dass** es das System zur Erkennung der Verfügbarkeit des Gleises nach Anspruch 1 umfasst.

13. Verfahren zur Erkennung der Verfügbarkeit des Gleises, das zur Erkennung der Verfügbarkeit eines Gleises (2) für ein spurgebundenes Fahrzeug (1) bestimmt ist, das sich von stromaufwärts nach stromabwärts bewegen kann, wobei das Verfahren die folgenden Schritte umfasst:
- Erfassen durch eine Kamera (31) mindestens eines Bildes eines stromabwärtigen Abschnitts des Gleises (2), wobei der stromabwärtige Abschnitt ein sich von einem ersten Punkt (P1) des Gleises (2) stromabwärts des spurgebundenen Fahrzeugs (1) zu einem zweiten Punkt (P2) des Gleises (2) stromabwärts des spurgebundenen Fahrzeugs (1) erstreckender Gleisabschnitt (2) ist, wobei der Abstand von der Kamera (31) zu dem zweiten Punkt (P2) größer ist als der Abstand von derjenigen zu dem ersten Punkt (P1);
- automatische Verarbeitung und Analyse jedes erfassten Bildes, um das Gleis in jedem erfassten Bild zu lokalisieren, einen stromabwärtigen Sicherheitsabstand und einen Verfügbarkeitszustand des Gleises zwischen dem ersten Punkt (P1) und dem zweiten Punkt (P2) zu erkennen,
**dadurch gekennzeichnet, dass** bekannte und unveränderliche Abmessungseigenschaften des Gleises verwendet werden, um den stromabwärtigen Abschnitt in Bezug auf die Kamera (31) zu lokalisieren, nachdem ein oder mehrere Gleisteile in dem Bild erkannt wurden.

14. Verfahren nach Anspruch 13, **dadurch gekennzeichnet, dass** es die Erzeugung eines Zustandssignals umfasst, das in der Lage ist, den Verfügbarkeitszustand des Gleises zu charakterisieren, und die Übertragung des Zustandssignals an mindestens ein weiteres spurgebundenes Fahrzeug.

## Claims

1. System for determining track availability that is designed to be fitted to a guided vehicle (1) liable to move downstream, said system comprising:
- at least one camera (31) able to capture at least one image (311) of a downstream section of said track (2), said downstream section being a track portion extending from a first point (P1) of said track (2) located downstream of said guided vehicle (1) to a second point (P2) of said track (2) located downstream of said guided vehicle (1), the distance separating the camera (31) from the second point (P2) being greater than the distance separating it from said first point (P1);
- at least one image processing and analysis device (32) able to analyse each image (311) taken by each camera (31), to locate said downstream section therein, to determine firstly a downstream safety distance, and secondly an availability state of the track (2) between said first point (P1) and said second point (P2),
**characterised in that** the image processing and analysis device (32) uses known and invariable dimensional features of the track to locate said downstream section in relation to said camera (31), once one or more track parts have been recognised in said image.

2. System according to claim 1, **characterised in that** the processing and analysis device (32) is able to determine a track length separating said guided vehicle (1) from at least one third point (P3) located between said first point (P1) and said second point (P2).

3. System according to one of claims 1 or 2, **characterised in that** it includes a database.

4. System according to one of claims 1 to 3, **characterised in that** it includes another camera able to capture at least one image of the downstream section of said track (2), said camera (31) and said other camera being able to cooperate to create a stereo image of said downstream section.

5. System according to one of claims 1 to 4, **characterised in that** it includes a radar system able to image said downstream section and to cooperate with said camera (31).

6. System according to claim 5, **characterised in that** it includes a movement device able to control the positioning of said radar system and/or of said camera (31) as a function of a position of said downstream section in said image (311) captured by the camera (31).

7. System according to one of claims 1 to 6, **characterised in that** said image processing and analysis device (32) is able to detect a discontinuity of said track (2) between said first point (P1) and said second point (P2).

8. System according to one of claims 1 to 7, **characterised in that** the image processing and analysis device (32) is able to detect a ground signal (4, 5) downstream of said guided vehicle (1).

9. System according to one of claims 1 to 8, **characterised in that** it includes a signalling device able to generate a track availability state signal that can characterise the availability state of said downstream section, said signal having a first value when said track is available for said guided vehicle (1) and a second value when said track (2) is occupied.

10. System according to claim 9, **characterised in that** it includes a communication device able to send said state signal to another communication device.

11. System according to one of claims 1 to 10, **characterised in that** it includes at least one supplementary camera configured to capture at least one image of an upstream section of said track (2).

12. Guided vehicle (1) **characterised in that** it includes said system for determining track availability according to claim 1.

13. Method for determining track availability designed to determine the availability of a track (2) for a guided vehicle (1) liable to be moving downstream, said method including the following stages:
- at least one image captured by a camera (31) of a downstream section of said track (2), said downstream section being a portion of track (2) extending from a first point (P1) of said track (2) located downstream of said guided vehicle (1) to a second point (P2) of said track (2) located downstream of said guided vehicle (1), the distance separating the camera (31) from the second point (P2) being greater than the distance separating it from said first point (P1);
- automatic processing and analysis of each image captured in order to locate said track in each image captured, to determine a downstream safety distance and an availability state of the track between said first point (P1) and said second point (P2),
**characterised in that** the known and invariable dimensional features of the track are used to locate said downstream section in relation to said camera (31), once one or more track parts have been recognised in said image.

14. Method according to claim 13, **characterised in that** it includes generation of a state signal able to characterise the availability state of the track and transmission of said state signal to at least one other guided vehicle.
